# EUROPEAN PATENT SPECIFICATION

(11) **EP 4 496 679 B1**
(45) Date of publication and mention of the grant of the patent: **22.07.2026**
(21) Application number: 23715233.5
(22) Date of filing: 16.03.2023
(51) Int. Cl.: B24D 11/00, C08F 283/10, B24D 3/28

(54) **CURABLE COMPOSITION, COATED ABRASIVE ARTICLE CONTAINING THE SAME, AND METHODS OF MAKING AND USING THE SAME**
HÄRTBARE ZUSAMMENSETZUNG, BESCHICHTETER SCHLEIFARTIKEL DAMIT UND VERFAHREN ZUR HERSTELLUNG UND VERWENDUNG DAVON
COMPOSITION DURCISSABLE, ARTICLE ABRASIF REVÊTU LA CONTENANT ET PROCÉDÉS DE FABRICATION ET D'UTILISATION DE CELLE-CI

(30) Priority: 21.03.2022 US 202263321986 P
(43) Date of publication of application: 29.01.2025
(73) Proprietor: 3M Innovative Properties Company, Saint Paul, Minnesota 55133-3427 (US)
(72) Inventor: LI, Junting, Saint Paul, Minnesota 55133-3427 (US); THURBER, Ernest L., Saint Paul, Minnesota 55133-3427 (US); LIU, Yuyang, Saint Paul, Minnesota 55133-3427 (US)
(74) Representative: Vossius & Partner Patentanwälte Rechtsanwälte mbB
(86) International application number: PCT/IB2023/052575
(87) International publication number: WO 2023/180880

(56) References cited:
- EP-A1- 1 664 150
- EP-A1- 1 907 476
- EP-A2- 1 904 577
- EP-B1- 1 436 122
- EP-B1- 1 664 150
- US-A1- 2004 029 511

## Description

### BACKGROUND

In general, coated abrasive articles have abrasive particles secured to a backing. More typically, coated abrasive articles comprise a backing having two major opposed surfaces and an abrasive layer secured to a major surface. The abrasive layer typically comprises abrasive particles and a binder, wherein the binder serves to secure the abrasive particles to the backing.

One common type of coated abrasive article has an abrasive layer comprising a make layer, a size layer, and abrasive particles. In making such a coated abrasive article, a make layer comprising a make layer precursor is applied to a major surface of the backing. Abrasive particles are then at least partially embedded into the make layer precursor (e.g., via electrostatic coating), and the make layer precursor is sufficiently cured (i.e., crosslinked) to secure the particles to the cured make layer precursor (i.e., the make layer). A size layer precursor is then applied over the make layer and abrasive particles, followed by at least partially curing the size layer precursor to provide a size layer. Some coated abrasive articles further comprise a supersize layer covering the abrasive layer. The supersize layer typically includes grinding aids and/or anti-loading materials.

It is a common practice in a coated abrasive art to add radiation-curable compounds (e.g., ultraviolet (UV) and/or visible light-curable compounds) to make layer precursor compositions. Often, the radiation- curable compounds are free-radically polymerizable (e.g., (meth)acrylic monomers). One advantage is that UV irradiation of the make layer precursor prior to abrasive particle coating, can result in a make layer precursor that is partially gelled, so the mineral penetration into the precursor make layer can be well controlled, leading to improved mineral orientation as compared to thermal cured make layer precursors such as phenolic resins. However, such formulations typically involve free-radical polymerization (e.g., of (meth)acrylates), which can be inhibited by oxygen in the air, leading to an undercured surface and degraded abrading performance.
Document EP1904577A2 discloses a curable composition comprising, based on the total weight of components a) through f): a) from 20 to 65 percent by weight of epoxy resin preparable by reaction of epichlorohydrin with at least one of bisphenol A or bisphenol F; b) from 29 to 75 percent by weight of polyfunctional urethane (meth)acrylate; c) from 0.1 to 15 percent by weight of novolac resin; d) dicyandiamide; e) photoinitiator; and f) optional epoxy cure catalyst.

### SUMMARY

The present invention defines a curable composition according to claim 1, a coated abrasive article according to claim 5 and a method of abrading or of making a coated abrasive according to claims 11 and 12 respectively. Preferred embodiments are defined in the appended claims.

Advantageously and unexpectedly, methods of making coated abrasive articles according to the present disclosure can improve orientation of the abrasive particles during electrostatic deposition of the abrasive particles, and formulations exhibit good resistance to surface oxygen inhibition.

In one aspect, the present disclosure provides a curable composition comprising, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin.

In yet another aspect, the present disclosure provides a coated abrasive article comprising a backing and an abrasive layer secured the backing, wherein the abrasive layer comprises a make layer disposed on at least a portion of a major surface of the backing, abrasive particles partially embedded in the make layer, and a size layer overlaying at least a portion of the make layer and abrasive particles, and wherein the make layer comprises a reaction product of components comprising, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin.

In yet another aspect, the present disclosure provides a method of making a coated abrasive article, the method comprising:
providing a backing having first and second opposed major surfaces;
disposing a curable make layer precursor on at least a portion of the first major surface, wherein the curable make layer precursor comprises, based on the total weight of components a) through g):
   a) from 45 to 55 percent by weight of epoxy resin preparable by reaction of epichlorohydrin with at least one of bisphenol A or bisphenol F;
   b) from 6 to 12 percent by weight of an at least trifunctional (meth)acrylate;
   c) from 35 to 45 percent by weight of a polythiol;
   d) 0 to 10 percent by weight of dicyandiamide;
   e) 0.1 to 2 percent of free-radical photoinitiator;
   f) 0.5 to 1 percent by weight of 2-alkylimidazole; and
   g) 0 to 5 percent of phenolic resin; and
exposing the curable make layer precursor to actinic radiation sufficient to provide a partially cured make layer precursor;
embedding abrasive particles in the partially cured make layer precursor;
curing the partially cured make layer precursor;
disposing a size layer precursor over the at least a portion of the make layer and abrasive particles; and
at least partially curing the size layer precursor.

The method preferably further comprises disposing a supersize layer over at least a portion of the size layer. In the method, the backing preferably comprises at least one of fabric, polymeric film, paper, mesh, vulcanized fiber, foil, or foam and has a basis weight in a range of from 40 to 1200 grams per square meter.

Coated abrasives according to the present disclosure are useful for abrading a workpiece by a method comprising:
providing a coated abrasive article according to the present disclosure;
frictionally contacting at least a portion of the abrasive layer with at least a portion of a surface of the workpiece; and
moving at least one of the coated abrasive article or the workpiece relative to the other to abrade at least a portion of the surface.

As used herein:
"essentially free of" means containing less than one weight percent of (e.g., less than 0.1 weight percent of, 0.01 weight percent of, or 0 weight percent of);
"(meth)acryl" refers to methacryl and/or
   acryl groups (i.e., 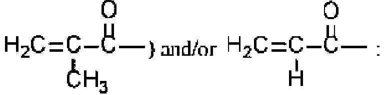 and
"weight percent" and "percent by weight" are interchangeable.

### BRIEF DESCRIPTION OF THE DRAWING

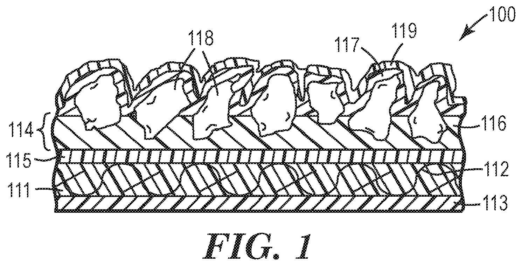

Fig. 1 is a cross-sectional side view of an exemplary coated abrasive article according to the present disclosure.

### DETAILED DESCRIPTION

Curable compositions according to one aspect of the present disclosure comprise, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of imidazole curative; and
g) 0 to 5 percent of phenolic resin.

Curable compositions according to the present disclosure comprise from 45 to 55 percent by weight of at least one epoxy resin preparable by reaction of epichlorohydrin with at least one of bisphenol A or bisphenol F, based on the total weight of components a) through g). Typically, such resins have an average epoxy functionality of two, although higher and lower functionalities may also be useful. The epoxy resin may be liquid or solid. Whether liquid or solid, the epoxy resin may be chosen to be soluble in compositions according to the present disclosure. In some instances, heating compositions according to the present disclosure may facilitate dissolution of the epoxy resin.

Examples of useful epoxy resins include the epoxy resins formed by reaction of bisphenol A or bisphenol F with epichlorohydrin, and mixtures of such resins. Examples of bisphenol A-epichlorohydrin derived epoxy resins, bisphenol A diglycidyl ether (commonly referred to in the art as DGEBA) and bisphenol F diglycidyl ether and commercially available epoxy resins having the trade designation EPON (e.g., EPON RESIN 825, EPON 828, EPON RESIN 828, EPON RESIN 1001F, EPON RESIN 1002F, EPON RESIN 1004F, EPON RESIN 1009F, and EPON RESIN 2003), marketed by Hexion, Columbus, Ohio and many epoxy resins having the trade designation D.E.R. (e.g., D.E.R. 331, D.E.R. 332, D.E.R. 351, D.E.R. 352, D.E.R. 354, and D.E.R. 356), marketed by Olin Chemical Company, Clayton, Missouri.

Curable compositions according to the present disclosure comprise from 6 to 12 percent by weight of at least one at least trifunctional (meth)acrylate, based on the total weight of components a) through g). By the phrase "at least one trifunctional (meth)acrylate" is meant a compound comprising at least three (e.g., For example, at least 3, 4, or even 5) (meth)acryloyloxy groups. For example, curable compositions according to the present disclosure may comprise from 6 to 10, or from 9 to 12 percent by weight of polyfunctional urethane (meth)acrylate, based on the total weight of components a) through g). Blends of more than one trifunctional (meth)acrylate can also be used.

Exemplary useful at least trifunctional (meth)acrylates include trimethylolpropane tri(meth)acrylate, glycerol tri(meth)acrylate, pentaerythritol tri(meth)acrylate, ethoxylated trimethylolpropane tri(meth)acrylate, pentaerythritol tetra(meth)acrylate, dipentaerythritol penta(meth)acrylate, sorbitol tri(meth)acrylate, sorbitol hexa(meth)acrylate, and mixtures thereof.

Curable compositions according to the present disclosure comprises 35 to 45 percent by weight of at least one polythiol (i.e., an organic polythiol), based on the total weight of components a) to f). The polythiol may have 2, 3, 4, 5, 6,7, 8, or more sulfhydryl (-SH) groups.

Examples of polythiols having more than two thiol groups include propane-1,2,3-trithiol; 1,2-bis[(2-mercaptoethyl)thio]-3-mercaptopropane; tetrakis(7-mercapto-2,5-dithiaheptyl)methane; and trithiocyanuric acid.

Exemplary useful dithiols include 1,2-ethanedithiol, 1,2-propanedithiol, 1,3-propanedithiol, 1,3-butanedithiol, 1,4-butanedithiol, 2,3-butanedithiol, 1,3-pentanedithiol, 1,5-pentanedithiol, 1,6-hexanedithiol, 1,3-dimercapto-3-methylbutane, dipentenedimercaptan, ethylcyclohexyldithiol (ECHDT), dimercaptodiethyl sulfide, methyl-substituted dimercaptodiethyl sulfide, dimethyl-substituted dimercaptodiethyl sulfide, dimercaptodioxaoctane, 1,5-dimercapto-3-oxapentane,benzene-1,2-dithiol, benzene-1,3-dithiol, benzene-1,4-dithiol, and tolylene-2,4-dithiol. Examples of polythiols having more than two thiol groups include propane-1,2,3-trithiol; 1,2-bis[(2-mercaptoethyl)thio]-3-mercaptopropane; tetrakis(7-mercapto-2,5-dithiaheptyl)methane; and trithiocyanuric acid.

Also useful are polythiols formed from the esterification of polyols with thiol-containing carboxylic acids or their derivatives. Examples of polythiols formed from the esterification of polyols with thiol-containing carboxylic acids or their derivatives include those made from the esterification reaction between thioglycolic acid or 3-mercaptopropionic acid and several polyols to form the mercaptoacetates or mercaptopropionates, respectively.

Examples of polythiol compounds that may be preferred because of relatively low odor level include, but are not limited to, esters of thioglycolic acid, α-mercaptopropionic acid, and β-mercaptopropionic acid with polyhydroxy compounds (polyols) such as diols (e.g., glycols), triols, tetrols, pentols, and hexols. Specific examples of such polythiols include, but are not limited to, ethylene glycol bis(thioglycolate), ethylene glycol bis(β-mercaptopropionate), trimethylolpropane tris(thioglycolate), trimethylolpropane tris(β-mercaptopropionate) and ethoxylated versions, pentaerythritol tetrakis(thioglycolate), pentaerythritol tetrakis(β-mercaptopropionate), and tris(hydroxyethyl)isocyanurate tris(β-mercaptopropionate). However, in those applications where concerns about possible hydrolysis of the ester exists, these polyols are typically less desirable.

Suitable polythiols also include those commercially available as THIOCURE PETMP (pentaerythritol tetra(3-mercaptopropionate)), TMPMP (trimethylolpropane tri(3-mercaptopropionate)), ETTMP (ethoxylated trimethylolpropane tri(3-mercaptopropionate) such as ETTMP 1300 and ETTMP 700), GDMP glycol di(3-mercaptopropionate), TMPMA (trimethylolpropane tri(mercaptoacetate)), TEMPIC (tris[2-(3-mercaptopropionyloxy)ethyl] isocyanurate), and PPGMP (propylene glycol 3-mercaptopropionate) from Bruno Bock Chemische Fabrik GmbH & Co. KG. A specific example of a polymeric polythiol is polypropylene-ether glycol bis(β-mercaptopropionate), which is prepared from polypropylene-ether glycol (e.g., PLURACOL P201, Wyandotte Chemical Corp.) and β-mercaptopropionic acid by esterification.

Suitable polythiols also include those preparable by esterification of polyols with thiol-containing carboxylic acids or their derivatives, those prepared from a ring-opening reaction of epoxides with H₂S (or its equivalent), those prepared from the addition of H₂S (or its equivalent) across carbon-carbon double bonds, polysulfides, polythioethers, and polydiorganosiloxanes. Specifically, these include the 3-mercaptopropionates (also referred to as β-mercaptopropionates) of ethylene glycol and trimethylolpropane (the former from Chemische Fabrik GmbH & Co. KG, the latter from Sigma-Aldrich); POLYMERCAPTAN 805C (mercaptanized castor oil); POLYMERCAPTAN 407 (mercaptohydroxy soybean oil) from Chevron Phillips Chemical Co. LLP, and CAPCURE, specifically CAPCURE 3-800 (a polyoxyalkylenetriol with mercapto end groups, from Gabriel Performance Products, Ashtabula, Ohio, and GPM-800, which is equivalent to CAPCURE 3-800, also from Gabriel Performance Products.

Oligomeric or polymeric polythioether polythiols useful for practicing the present disclosure are also described in, for example, U.S. Pat. Nos. 4,609,762 (Morris et al.), 5,225,472 (Cameron et al.), 5,912,319 (Zook et al.), 5,959,071 (DeMoss et al.), and 6,509,418 (Zook et al.).

In some embodiments, the polythiol is oligomeric or polymeric. Examples of useful oligomeric or polymeric polythiols include polythioethers and polysulfides. Polythioethers include thioether linkages (i.e., -S-) in their backbone structures. Polysulfides include disulfide linkages (i.e., -S-S-) in their backbone structures.

Other useful polythiols can be formed from the addition of hydrogen sulfide (H₂S) (or its equivalent) across carbon-carbon double bonds. For example, dipentene and triglycerides which have been reacted with H₂S (or its equivalent). Specific examples include dipentene dimercaptan and those polythiols available as POLYMERCAPTAN 358 (mercaptanized soybean oil) and POLYMERCAPTAN 805C (mercaptanized castor oil) from Chevron Phillips Chemical Co. LLP. At least for some applications, the preferred polythiols are POLYMERCAPTAN 358 and 805C since they are produced from largely renewable materials, i.e., the triglycerides, soybean oil and castor oil, and have relatively low odor in comparison to many thiols. Useful triglycerides have at least two sites of unsaturation, i.e., carbon-carbon double bonds, per molecule on average, and sufficient sites are converted to result in at least 2 thiols per molecule on average. In the case of soybean oil, this requires a conversion of approximately 42 percent or greater of the carbon-carbon double bonds, and in the case of castor oil this requires a conversion of approximately 66 percent or greater of the carbon-carbon double bonds. Typically, higher conversion is preferred, and POLYMERCAPTAN 358 and 805C can be obtained with conversions greater than approximately 60 percent and 95 percent, respectively. Useful polythiols of this type also include those derived from the reaction of H₂S (or its equivalent) with the glycidyl ethers of bisphenol A epoxy resins, bisphenol F epoxy resins, and novolac epoxy resins. A preferred polythiol of this type is QX11, derived from bisphenol A epoxy resin, from Japan Epoxy Resins (JER) as EPOMATE. Other polythiols suitable include those available as EPOMATE QX10 and EPOMATE QX20 from JER.

Still other useful polythiols are polysulfides that contain thiol groups such as those available as THIOKOL LP-2, LP-3, LP-12, LP-31, LP-32, LP-33, LP-977, and LP-980 from Toray Fine Chemicals Co., Ltd., and polythioether oligomers and polymers such as those described in PCT Publ. No. WO 2016/130673 A1 (DeMoss et al.).

Curable compositions according to the present disclosure comprise an optional amount of dicyandiamide for accelerating the cure of the composition. For example, the curable composition comprises 2-alkylimidazole and may comprise 0 to 10 percent by weight of dicyandiamide, based on the total weight of components a) through g).

Curable compositions according to the present disclosure comprise an effective amount of photoinitiator for curing the composition. For example, the curable composition may comprise from 0.1 to 2 percent, or 0.3 to 1 percent, by weight of free-radical photoinitiator, based on the total weight of components a) through g).

Useful free-radical photoinitiator may be a single photoinitiator or a combination of two or more photoinitiators. Photoinitiators useful in the practice of disclosure include those known as useful for free-radical photocuring of (meth)acrylates. Exemplary photoinitiators include benzoin and its derivatives such as α-methylbenzoin; α-phenylbenzoin; α-allylbenzoin; α-benzylbenzoin; benzoin ethers such as benzil dimethyl ketal, benzoin methyl ether, benzoin ethyl ether, benzoin n-butyl ether; acetophenone and its derivatives such as 2-hydroxy-2-methyl-1-phenyl-1-propanone, and 1-hydroxycyclohexyl phenyl ketone, 2-methyl-1-[4-(methylthio)phenyl]-2-(4-morpholinyl)-1-propanone, and 2-benzyl-2-(dimethylamino)-1-[4-(4-morpholinyl)phenyl]-1- butanone.

Curable compositions according to the present disclosure include 0.5 to 1 percent by weight of a 2-alkylimidazole (an epoxy curative) such as, for example, 2-ethylimidazole, and 2-ethyl-4-methylimidazole (e.g., as marketed under the trade designation "IMICURE EMI-2,4" by Air Products and Chemicals, Allentown, Pennsylvania, and 2-propylimidazole (e.g., as marketed under the trade designation "ACTIRON NXJ-60" by Synthron, Morganton, North Carolina).

Curable compositions according to the present disclosure include 0 to 5 percent by weight (i.e., it is optional), based on the total weight of components a) to g) of phenolic resin. In some embodiments, 4 to 5 percent by weight, based on the total weight of components a) to g). Useful phenolic resins may include novolac phenolic and/or resole phenolic resin(s).

Typically, novolac resins are made by reacting a phenolic monomer (e.g., phenol, cresol, xylenol, resorcinol, catechol, bisphenol A, naphthol, or a combination thereof) with an aldehyde in the presence of an acid catalyst, with the molar ratio of the aldehyde to phenol being less than one. Examples of aldehydes used to prepare novolacs include formaldehyde, acetaldehyde, propionaldehyde, glyoxal, and furfural. Typically, these novolac resins have a molecular weight ranging from 300 to 1,500, although higher and lower molecular weights may also be useful. Additionally, the starting phenolic monomer can be substituted with various groups such as alkyl, alkoxy, carboxyl, and sulfo, as long as there are at least two reactive sites remaining to form the novolac.

Many novolac phenolic resins are readily available from commercial suppliers including, for example, Georgia Pacific Resins, Atlanta, Georgia (e.g., as marketed under the trade designations "GP 2074", "GP 5300", "GP 5833", "RESI-FLAKE GP-2049", "RESI-FLAKE GP-2050", or "RESI-FLAKE GP-2211"); Bakelite AG, Frielendorf, Germany (e.g., as marketed under the trade designation "RUTAPHEN 8656F"); Borden Chemical, Inc (e.g., as marketed under the trade designations "DURITE 423A" or "DURITE SD1731"). While novolac resins are typically useful, resole phenolic resins may tend to interfere with curing of curable compositions according to the present invention, and if included should be used with discretion.

Curable compositions according to the present disclosure may further comprise an optional bireactive polymerizable component, for example, a compound having at least one free-radically polymerizable group, and at least one cationically polymerizable group. Bireactive compounds can be made, for example, by introducing at least one ethylenically unsaturated group into a compound that already contains one or more epoxy groups, or, conversely, by introducing at least one epoxy group into a compound that already contains one or more ethylenically unsaturated group.

Curable compositions according to the present disclosure may contain a variety of additives such as, for example, fillers, thickeners, tougheners, grinding aids, pigments, fibers, tackifiers, lubricants, wetting agents, surfactants, antifoaming agents, dyes, coupling agents, plasticizers, and suspending agents.

In applications in which low viscosity is desirable, such as, for example, as a backing treatment, curable compositions according to the present disclosure may be essentially free of dissolved thermoplastic polymers (e.g., thermoplastic polymers having a weight average molecular weight of 5,000 or more), as such materials tend to greatly increase viscosity, which may make coating processes difficult (e.g., saturating a porous backing).

Curable compositions according to the present disclosure may be applied to a variety of substrates using conventional methods such as, for example, roll coating (e.g., using soft rubber rolls), spraying, transfer coating, dip coating, screen printing, gravure coating, curtain coating, bar coating, knife coating, or die coating. Curable compositions may be applied to a substrate in a uniform or patterned manner, and may be continuous or discontinuous.

If utilizing curable compositions comprising solid components, such compositions may be prepared, for example, by mixing some or all of the various materials of the curable composition in a suitable vessel at an elevated temperature, for example, less than 100 °C, sufficient to liquify at least some of the materials so that they may be efficiently mixed, with stirring, to form the curable composition, but without thermally degrading the components.

Curable compositions may be cured by exposure to thermal energy, actinic radiation, or more typically a combination thereof. In such cases, curing of the curable composition typically begins upon exposing it to an appropriate source of actinic radiation (e.g., ultraviolet, visible, or particulate radiation), and may continue for a period thereafter.

Useful forms of thermal energy include, for example, heat and infrared radiation. Exemplary sources of thermal energy include ovens, heated rolls, hot air blowers, infrared lamps, and combinations thereof.

The choice of the source of actinic radiation is typically selected depending on the intended processing conditions, and to appropriately activate the photoinitiator. Exemplary useful sources of ultraviolet and visible radiation include mercury, xenon, carbon arc, tungsten filament lamps, and sunlight. Ultraviolet radiation, especially from a medium pressure mercury arc lamp or a microwave driven H-type, D-type, or V-type mercury lamp, such as of those commercially available from Fusion UV Systems, Gaithersburg, Maryland, is especially desirable.

Exposure times for the actinic radiation typically range, for example, from less than about 0.01 second to 1 minute or longer providing, for example, a total energy exposure from 0.1 to 10 Joules per square centimeter (J/cm²) depending upon the amount and the type of reactive components involved, the energy source, web speed, the distance from the energy source, and the thickness of the make layer to be cured. Filters and/or dichroic reflectors may also be useful, for example, to reduce thermal energy that accompanies the actinic radiation.

If electron beam radiation is used, the dosage necessary is generally from less than 1 megarad to 100 megarads or more.

The good adhesion and ability to control abrasive particle orientation of curable compositions according to the present disclosure make them suitable for use as a make layer in certain coated abrasive articles. One such coated abrasive article is illustrated in Fig. 1. Referring now to Fig. 1, exemplary coated abrasive article 100 comprises backing 112. Backing 112 may optionally be saturated with saturant 111. Additionally, backing 112 may be treated with optional backsize layer 113 and/or optional presize layer 115. In the case that backing 112 is porous, backsize layer 113 and presize layer 115 penetrate into the backing, and may even contact each other within the porous interior of the backing in some cases. Overlaying presize layer 115 is abrasive layer 114 comprising make layer 116 in which are embedded abrasive grits 118 and size layer 117 which overlays make layer 116 and abrasive grits 118. Optional supersize layer 119 overlays size layer 117.

Curable compositions according to the present disclosure may be applied onto a backing as a make layer precursor, which is then at least partially cured at an appropriate point in the manufacturing process to partially embed abrasive particles therein.

For use in coated abrasive articles, the thickness of the backing generally ranges from 0.02 to 5 millimeters, for example, from 0.05 to 2.5 millimeters, or from 0.1 to 1 millimeter, although thicknesses outside of these ranges may also be useful.

The backing may also be a laminate of two materials (e.g., paper/film, cloth/paper, or film/cloth). The backing may also be a fibrous reinforced thermoplastic such as described, for example, as described, for example, in U.S. Pat. No. 5,417,726 (Stout et al.), or an endless spliceless belt, as described, for example, in U.S. Pat. No. 5,573,619 (Benedict et al.).

The backing may be a polymeric substrate having hooking stems projecting therefrom such as that described, for example, in U.S. Pat. No. 5,505,747 (Chesley et al.), or the backing may be a loop fabric such as that described, for example, in U.S. Pat. No. 5,565,011 (Follett et al.).

The choice of backing material may depend on the intended application of the coated abrasive article. The thickness and smoothness of the backing should also be suitable to provide the desired thickness and smoothness of the coated abrasive article, wherein such characteristics of the coated abrasive article may vary depending, for example, on the intended application or use of the coated abrasive article.

An antistatic material may be included in any of these backing treatment materials. The addition of an antistatic material can reduce the tendency of the coated abrasive article to accumulate static electricity when sanding wood or wood-like materials. Additional details regarding antistatic backings and backing treatments can be found in, for example, U.S. Pat. Nos. 5,108,463 (Buchanan et al.); 5,137,542 (Buchanan et al.); 5,328,716 (Buchanan); and 5,560,753 (Buchanan et al).

In some instances, it may be desirable to incorporate a pressure-sensitive adhesive onto the backside of the coated abrasive article such that the resulting coated abrasive article can be secured to a backup pad. Exemplary pressure-sensitive adhesives include latex crepe, rosin, acrylic polymers, and copolymers including polyacrylate esters (e.g., poly(butyl acrylate)), vinyl ethers (e.g., poly(vinyl n-butyl ether)), alkyd adhesives, rubber adhesives (e.g., natural rubber, synthetic rubber, chlorinated rubber), and mixtures thereof.

To promote adhesion of binder resins to the backing, one or more surfaces of the backing may be modified by known methods including corona discharge, ultraviolet light exposure, electron beam exposure, flame discharge, and/or scuffing.

The basis weight of the make layer utilized may depend, for example, on the intended use(s), type(s) of abrasive particles, and nature of the coated abrasive article being prepared, but generally will be in the range of from 1, 2, or 5 to 20, 25, 400, or even 600 grams per square meter (i.e., g/m²). The curable make layer precursor may be applied by any known coating method for applying a make layer precursor to a backing, including, for example, roll coating, extrusion die coating, curtain coating, knife coating, gravure coating, and spray coating.

After applying a curable make layer precursor to the backing, and prior to solidification of the curable make layer precursor (e.g., by curing), abrasive particles are deposited onto the make layer. although typically after gelling of the make layer precursor by exposure to actinic radiation.

Exemplary useful abrasive particles include fused aluminum oxide based materials such as aluminum oxide, ceramic aluminum oxide (which may include one or more metal oxide modifiers and/or seeding or nucleating agents), and heat-treated aluminum oxide, silicon carbide, co-fused alumina-zirconia, diamond, ceria, titanium diboride, cubic boron nitride, boron carbide, garnet, flint, emery, sol-gel derived abrasive particles, and blends thereof. Examples of sol-gel abrasive particles include those described U.S. Pat. Nos. 4,314,827 (Leitheiser et al.); 4,518,397 (Leitheiser et al.); 4,623,364 (Cottringer et al.); 4,744,802 (Schwabel); 4,770,671 (Monroe et al.); 4,881,951 (Wood et al.); 5,011,508 (Wald et al.); 5,090,968 (Pellow); 5,139,978 (Wood); 5,201,916 (Berg et al.); 5,227,104 (Bauer); 5,366,523 (Rowenhorst et al.); 5,429,647 (Larmie); 5, 498,269 (Larmie); and 5,551,963 (Larmie). The abrasive particles may be in the form of, for example, individual particles, agglomerates, abrasive composite particles, and mixtures thereof.

Preferably, the abrasive particles (and especially the abrasive particles) comprise ceramic abrasive particles such as, for example, sol-gel-derived polycrystalline alpha alumina particles. Ceramic abrasive particles composed of crystallites of alpha alumina, magnesium alumina spinel, and a rare earth hexagonal aluminate may be prepared using sol-gel precursor alpha alumina particles according to methods described in, for example, U.S. Pat. No. 5,213,591 (Celikkaya et al.) and U.S. Publ. Pat. Appln. Nos. 2009/0165394 A1 (Culler et al.) and 2009/0169816 A1 (Erickson et al.). Further details concerning methods of making sol-gel-derived abrasive particles can be found in, for example, U.S. Pat. Nos. 4,314,827 (Leitheiser); 5,152,917 (Pieper et al.); 5,435,816 (Spurgeon et al.); 5,672,097 (Hoopman et al.); 5,946,991 (Hoopman et al.); 5,975,987 (Hoopman et al.); and 6,129,540 (Hoopman et al.); and in U.S. Publ. Pat. Appln. No. 2009/0165394 A1 (Culler et al.).

In some preferred embodiments, useful abrasive particles (especially in the case of the abrasive particles) may be shaped abrasive particles can be found in U.S. Pat. Nos. 5,201,916 (Berg); 5,366,523 (Rowenhorst (Re 35,570)); and 5,984,988 (Berg). U.S. Pat. No. 8,034,137 (Erickson et al.) describes alumina abrasive particles that have been formed in a specific shape, then crushed to form shards that retain a portion of their original shape features. In some embodiments, the abrasive particles are precisely-shaped (i.e., the particles have shapes that are at least partially determined by the shapes of cavities in a production tool used to make them. Details concerning such abrasive particles and methods for their preparation can be found, for example, in U.S. Pat. Nos. 8,142,531 (Adefris et al.); 8,142,891 (Culler et al.); 8,142,532 (Erickson et al.); 9,771,504 (Adefris); and in U.S. Pat. Appl. Publ. Nos. 2012/0227333 (Adefris et al.); 2013/0040537 (Schwabel et al.); and 2013/0125477 (Adefris). One particularly useful precisely-shaped abrasive particle shape is that of a platelet having three-sidewalls, any of which may be straight or concave, and which may be vertical or sloping with respect to the platelet base; for example, as set forth in the above cited references.

Surface coatings on the abrasive particles may be used to improve the adhesion between the abrasive particles and a binder material, or to aid in electrostatic deposition of the abrasive particles. In one embodiment, surface coatings as described in U.S. Pat. No. 5,352,254 (Celikkaya) in an amount of 0.1 to 2 percent surface coating to abrasive particle weight may be used. Such surface coatings are described in U.S. Pat. Nos. 5,213,591 (Celikkaya et al.); 5,011,508 (Wald et al.); 1,910,444 (Nicholson); 3,041,156 (Rowse et al.); 5,009,675 (Kunz et al.); 5,085,671 (Martin et al.); 4,997,461 (Markhoff-Matheny et al.); and 5,042,991 (Kunz et al.). Additionally, the surface coating may prevent shaped abrasive particles from capping. Capping is the term to describe the phenomenon where metal particles from the workpiece being abraded become welded to the tops of the abrasive particles. Surface coatings to perform the above functions are known to those of skill in the art.

In some embodiments, the abrasive particles may be selected to have a length and/or width in a range of from 0.1 micrometers to 3.5 millimeters (mm), more typically 0.05 mm to 3.0 mm, and more typically 0.1 mm to 2.6 mm, although other lengths and widths may also be used.

The abrasive particles may be selected to have a thickness in a range of from 0.1 micrometer to 1.6 mm, more typically from 1 micrometer to 1.2 mm, although other thicknesses may be used. In some embodiments, abrasive particles may have an aspect ratio (length to thickness) of at least 2, 3, 4, 5, 6, or more.

Abrasive particles may be independently sized according to an abrasives industry recognized specified nominal grade. Exemplary abrasive industry recognized grading standards include those promulgated by ANSI (American National Standards Institute), FEPA (Federation of European Producers of Abrasives), and JIS (Japanese Industrial Standard). Such industry accepted grading standards include, for example: ANSI 4, ANSI 6, ANSI 8, ANSI 16, ANSI 24, ANSI 30, ANSI 36, ANSI 40, ANSI 50, ANSI 60, ANSI 80, ANSI 100, ANSI 120, ANSI 150, ANSI 180, ANSI 220, ANSI 240, ANSI 280, ANSI 320, ANSI 360, ANSI 400, and ANSI 600; FEPA P8, FEPA P12, FEPA P16, FEPA P24, FEPA P30, FEPA P36, FEPA P40, FEPA P50, FEPA P60, FEPA P80, FEPA P100, FEPA P120, FEPA P150, FEPA P180, FEPA P220, FEPA P240, FEPA P320, FEPA P400, FEPA P500, FEPA P600, FEPA P800, FEPA P1000, FEPA P1200; FEPA F8, FEPA F12, FEPA F16, and FEPA F24;.and JIS 8, JIS 12, JIS 16, JIS 24, JIS 36, JIS 46, JIS 54, JIS 60, JIS 80, JIS 100, JIS 150, JIS 180, JIS 220, JIS 240, JIS 280, JIS 320, JIS 360, JIS 400, JIS 600, JIS 800, JIS 1000, JIS 1500, JIS 2500, JIS 4000, JIS 6000, JIS 8000, and JIS 10,000. More typically, the crushed aluminum oxide particles and the non-seeded sol-gel derived alumina-based abrasive particles are independently sized to ANSI 60 and 80, or FEPA F36, F46, F54 and F60 or FEPA P60 and P80 grading standards.

Alternatively, the abrasive particles can be graded to a nominal screened grade using U.S.A. Standard Test Sieves conforming to ASTM E-11 "Standard Specification for Wire Cloth and Sieves for Testing Purposes". ASTM E-11 prescribes the requirements for the design and construction of testing sieves using a medium of woven wire cloth mounted in a frame for the classification of materials according to a designated particle size. A typical designation may be represented as -18+20 meaning that the shaped abrasive particles pass through a test sieve meeting ASTM E-11 specifications for the number 18 sieve and are retained on a test sieve meeting ASTM E-11 specifications for the number 20 sieve. In one embodiment, the shaped abrasive particles have a particle size such that most of the particles pass through an 18 mesh test sieve and can be retained on a 20, 25, 30, 35, 40, 45, or 50 mesh test sieve. In various embodiments, the shaped abrasive particles can have a nominal screened grade comprising: -18+20, -20+25, -25+30, -30+35, -35+40, -40+45, -45+50, -50+60, -60+70, -70+80, -80+100, -100+120, -120+140, -140+170, -170+200, -200+230, -230+270, -270+325, -325+400, -400+450, -450+500, or -500+635. Alternatively, a custom mesh size could be used such as -90+100.Exemplary agglomerates are described, for example, in U.S. Pat. Nos. 4,652,275 (Bloecher et al.) and 4,799,939 (Bloecher et al.), the disclosures of which are incorporated herein by reference. It is also within the scope of the present disclosure to use diluent erodible agglomerate grains as described, for example, in U.S. Pat. No. 5,078,753 (Broberg et al.).

Abrasive composite particles comprise abrasive grains in a binder.

Exemplary abrasive composite particles are described, for example, in U.S. Pat. No. 5,549,962 (Holmes et al.).

Coating weights for the abrasive particles may depend, for example, on the specific coated abrasive article desired, the process for applying the abrasive particles, and the size of the abrasive particles, but typically range from 1 to 2000 g/m².

A size layer precursor is then applied over the partially cured make layer and abrasive particles, followed by at least partially curing the size layer precursor to provide a size layer. Exemplary size layer precursors include phenolic resins, epoxy resins, acrylic monomers, and combinations thereof. The size layer precursor may be applied by applying and curing a curable size layer precursor using any known coating method including, for example, roll coating, extrusion die coating, curtain coating, or spray coating.

Then a curable size layer precursor, which may be the same as or different from the curable make layer precursor may include at least one curative is deposited over the at least partially cured make layer precursor and abrasive particles. The selection of curative will be influenced by the resin being cured. Selection of appropriate curative and amounts is within the capabilities of those skilled in the art.

The basis weight of the size layer will also necessarily vary depending on the intended use(s), type(s) of abrasive particles, and nature of the coated abrasive article being prepared, but generally will be in the range of from 1 or 5 g/m² to 300, or even 800 g/m², or more.

If present, the optional supersize typically includes grinding aids and/or anti-loading materials. The optional supersize may serve to prevent or reduce the accumulation of swarf (the material abraded from a workpiece) between abrasive particles, which can dramatically reduce the cutting ability of the coated abrasive disc. Useful supersizes typically include a grinding aid (e.g., potassium tetrafluoroborate), metal salts of fatty acids (e.g., zinc stearate or calcium stearate), salts of phosphate esters (e.g., potassium behenyl phosphate), phosphate esters, urea-formaldehyde resins, mineral oils, crosslinked silanes, crosslinked silicones, and/or fluorochemicals.

The optional supersize can be disposed onto the size layer using any known coating method including, for example, roll coating, extrusion die coating, curtain coating, or spray coating.

Useful supersizes are further described, for example, in U. S. Pat. No. 5,556,437 (Lee et al.). Typically, the amount of grinding aid incorporated into coated abrasive products is about 50 to about 400 gsm, more typically about 80 to about 300 gsm. The supersize may contain a binder such as for example, those used to prepare the size or make layer, but it need not have any binder.

Further details concerning coated abrasive articles comprising abrasive particles and make, size, and optional supersize layers are well known and are described, for example, in U.S. Pat. Nos. 4,734,104 (Broberg); 4,737,163 (Larkey); 5,203,884 (Buchanan et al.); 5,152, 917 (Pieper et al.); 5,378,251 (Culler et al.); 5,417,726 (Stout et al.); 5,436,063 (Follett et al.); 5,496,386 (Broberg et al.); 5,609,706 (Benedict et al.); 5,520,711 (Helmin); 5,954, 844 (Law et al.); 5,961,674 (Gagliardi et al.); 4,751,138 (Bange et al.); 5,766,277 (DeVoe et al.); 6,077,601 (DeVoe et al.); 6,228,133 (Thurber et al.); and 5,975,988 (Christianson).

Coated abrasive articles according to the present disclosure can be converted, for example, into belts, tapes, rolls, discs (including perforated discs), and/or sheets. For belt applications, two free ends of the abrasive sheet may be joined together using known methods to form a spliced belt. A spliceless belt may also be formed as described, for example, in U.S. Pat. No. 5,573,619 (Benedict et al.).

Coated abrasive articles according to the present disclosure are useful for abrading a workpiece. One such method includes frictionally contacting at least a portion of the abrasive layer of a coated abrasive article with at least a portion of a surface of the workpiece, and moving at least one of the coated abrasive article or the workpiece relative to the other to abrade at least a portion of the surface.

Examples of workpiece materials include metal, metal alloys, exotic metal alloys, ceramics, glass, wood, wood-like materials, composites, painted surfaces, plastics, reinforced plastics, stone, and/or combinations thereof. The workpiece may be flat or have a shape or contour associated with it. Exemplary workpieces include metal components, plastic components, particleboard, camshafts, crankshafts, furniture, and turbine blades.

Coated abrasive articles according to the present disclosure may be used by hand and/or used in combination with a machine. At least one or both of the coated abrasive article and the workpiece is generally moved relative to the other when abrading.

Abrading may be conducted under wet or dry conditions. Exemplary liquids for wet abrading include water, water containing conventional rust inhibiting compounds, lubricant, oil, soap, and cutting fluid. The liquid may also contain defoamers, degreasers, and/or the like.

Objects and advantages of this disclosure are further illustrated by the following non-limiting examples, but the particular materials and amounts thereof recited in these examples, as well as other conditions and, details, should not be construed to unduly limit this disclosure.

### EXAMPLES

Unless stated otherwise, all other reagents were obtained, or are available from fine chemical vendors such as Sigma-Aldrich Company, St. Louis, Missouri, or may be synthesized by known methods.

Unit Abbreviations used in the Examples: gsm = grams per square meter, °C = degrees Celsius; cm = centimeter; mm = millimeter; µm = micrometer; fpm = feet per minute; and kV = kilovolts.

Table 1, below, reports material used in the Examples.

**TABLE 1**

| | |
|---|---|
| PFR | Phenol-formaldehyde resin having a phenol to formaldehyde molar ratio of 1: 1.5-2.1, and catalyzed with 2.5 percent by weight potassium hydroxide |
| EPOXY | Bisphenol A-based liquid epoxy resin available as EPON 828 from Hexion, Columbus, Ohio. |
| PETMP | Pentaerythritol tetra(3-mercaptopropionate), available from TCI America, Inc., Portland, Oregon. |
| TMPTA | Trimethylolpropane triacrylate available from Sartomer USA, LLC., Exton, Pennsylvania. |
| BDK | 2,2-dimethoxy-2-phenylacetophenone commercially available as OMNIRAD 651 from IGM Resins USA Inc., Charlotte, North Carolina. |
| NPR | Novolac phenolic resin available as RUTAPHEN 8656 from Hexion, Columbus, Ohio |
| DCDA | Dicyandiamide available as DICYNEX 1400B from Evonik, Mapleton, Illinois |
| 2-PI | 2-Propylimidazole available as CUREMOD 2-PI-60LIQ from Near Chemical Specialties Inc., Buffalo Grove, Illinois |
| WET | Glycol ester of fatty acid based wetting agent available as INTERWET 33 from Valtris Specialty Chemicals Inc. Walton Hills, Ohio |
| MR1 | Make resin 2, prepared by mixing 66.37 parts by weight of PFR, 0.44 parts by weight of WET, and 33.19 parts by weight of tap water |
| PET | 3mil (76.2 µm) thickness PET film backing with 20 µm ethylene acrylic acid primer obtained from 3M Company, St. Paul, Minnesota, made from thermally extruded, biaxially stretched, polyethylene terephthalate (PET) resin |
| SAP | Shaped ceramic abrasive particles, prepared according to the disclosure of U.S. Pat. No. 8,142,531 (Adefris et al.)*.* The SAP used in the examples were about 0.10 mm (side length) × 0.02 mm (thickness), with a draft angle approximately 98 degrees. |
| ALO | FEPA P grade 400 aluminum oxide abrasive mineral available as BFRPL P400 from Imerys Fused Minerals Niagara Falls, Inc., Niagara Falls, New York |

### EXAMPLE 1

47.44 parts by weight of EPOXY was mixed with 11.21 parts by weight of TMPTA at room temperature until homogeneous using a mechanical stirrer, and then 0.33 parts by weight of BDK was added during stirring. The mixture was heated to 60 °C. After BDK was completely dissolved, 40.27 parts by weight of PETMP and 0.75 parts by weight of 2-PI were added and mixed until homogeneous.

SAP and ALO were pre-blended with a 50/50 ratio by weight. 0.6 grams of the blended minerals were uniformly dispersed on a 10.16 cm × 22.86 cm mineral bed. The treatment solution resin obtained above was coated using a draw-down scraper on a 11.4 cm x 25.4 cm sheet of PET at a gap of 25.4 µm on an area equal to the mineral bed. The make coat weight was 0.4 grams. The coated film was placed on a conveyer at 12 fpm with the make coating facing up and going through UV irradiation generated by a H bulb (300 WPI). The film was then placed right above the mineral bed with the coat side facing down to the minerals and the coating area well aligned with the mineral dispersion. Minerals were coated electrostatically in a 15-17 kV direct current electric field. Mineral coat weight was about 0.3 g. The coated sample was placed in an oven at 140 °C for 5 minutes to cure for peak count analysis.

### COMPARATIVE EXAMPLE A

SAP and ALO were pre-blended with a 50/50 ratio by weight. 0.6 grams of the blended minerals were uniformly dispersed on a 10.16 cm × 22.86 cm mineral bed. MR1 was coated using a draw-down scraper on a 11.4 cm x 25.4 cm sheet of PET at a gap of 50.8 µm on an area equal to the mineral bed. The film was then placed right above the mineral bed with the coat side facing down to the minerals and the coating area well aligned with the mineral dispersion. Minerals were coated electrostatically in a 15-17 kV direct current electric field. Mineral coat weight was about 0.3 g. The coated sample was placed in an oven at 90 °C for 1 hour and 105 °C for 1 hour sequentially to cure for peak count analysis.

Images were taken with a Keyence microscope for SAP orientation analysis, and only SAP with integral triangular shape were considered. Peaks are defined as SAP standing up with the dihedral angle to the backing larger than 45°, while SAP with the dihedral angle smaller than 45° are considered lying down. SAP orientation ratio is calculated as peak count divided by total SAP count. Table 1, below reports the orientation of SAP in Example 7 and Comparative Example C.

**TABLE 1**

| | Peak | Lying down | Tip down | Orientation ratio |
|---|---|---|---|---|
| EXAMPLE 1 | 47 | 2 | 6 | 85.5% |
| COMPARATIVE EXAMPLE A | 16 | 42 | 3 | 26.2% |

Various modifications and alterations of this disclosure may be made by those skilled in the art without departing from the scope of the invention as defined in the appended claims.

## Claims

1. A curable composition comprising, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin.

2. A curable composition according to claim 1, wherein the curable composition contains less than one weight percent of phenolic resin.

3. A curable composition according to claim 1 or 2, wherein the curable composition contains less than one weight percent of dissolved thermoplastic polymer.

4. A curable composition according to any of claims 1 to 3, wherein the binder contains less than one weight percent of dicyandiamide.

5. A coated abrasive article comprising a backing and an abrasive layer secured the backing, wherein the abrasive layer comprises a make layer disposed on at least a portion of a major surface of the backing, abrasive particles partially embedded in the make layer, and a size layer overlaying at least a portion of the make layer and abrasive particles, and wherein the make layer comprises a reaction product of components comprising, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin.

6. A coated abrasive article according to claim 5, wherein the make layer contains less than one weight percent of phenolic resin.

7. A coated abrasive article according to claim 5 or 6, wherein the make layer contains less than one weight percent of dissolved thermoplastic polymer.

8. A coated abrasive article according to any of claims 5 to 7, wherein the make layer contains less than one weight percent of dicyandiamide.

9. A coated abrasive article according to any of claims 5 to 8, wherein the backing comprises at least one of fabric, polymeric film, paper, mesh, vulcanized fiber, foil, or foam and has a basis weight in a range of from 40 to 1200 grams per square meter.

10. A coated abrasive article according to any of claims 5 to 9, further comprising a supersize layer disposed on at least a portion of the size layer.

11. A method of abrading a workpiece comprising:
providing a coated abrasive article according to any of claims 5 to 10;
frictionally contacting at least a portion of the abrasive layer with at least a portion of a surface of the workpiece; and
moving at least one of the coated abrasive article or the workpiece relative to the other to abrade at least a portion of the surface.

12. A method of making a coated abrasive article comprising:
providing a backing having first and second opposed major surfaces;
disposing a curable make layer precursor on at least a portion of the first major surface, wherein the curable make layer precursor comprises, based on the total weight of components a) through g):
a) from 45 to 55 percent by weight of epoxy resin preparable by reaction of epichlorohydrin with at least one of bisphenol A or bisphenol F;
b) from 6 to 12 percent by weight of an at least trifunctional (meth)acrylate;
c) from 35 to 45 percent by weight of a polythiol;
d) 0 to 10 percent by weight of dicyandiamide;
e) 0.1 to 2 percent of free-radical photoinitiator;
f) 0.5 to 1 percent by weight of 2-alkylimidazole; and
g) 0 to 5 percent of phenolic resin; and
exposing the curable make layer precursor to actinic radiation sufficient to provide a partially cured make layer precursor;
embedding abrasive particles in the partially cured make layer precursor;
curing the partially cured make layer precursor;
disposing a size layer precursor over the at least a portion of the make layer and abrasive particles; and
at least partially curing the size layer precursor.

13. A method according to claim 12, wherein the binder contains less than one weight percent of phenolic resin.

14. A method according to claim 12 or 13, wherein the binder contains less than one weight percent of dissolved thermoplastic polymer.

15. A method according to any of claims 12 to 14, wherein the binder contains less than one weight percent of dicyandiamide.

## Patentansprüche

1. Eine härtbare Zusammensetzung, umfassend, bezogen auf das Gesamtgewicht der Komponenten a) bis g):
a) von 45 bis 55 Gewichtsprozent Epoxidharz, herstellbar durch Umsetzung von Epichlorhydrin mit mindestens einem von Bisphenol A oder Bisphenol F;
b) von 6 bis 12 Gewichtsprozent eines mindestens trifunktionellen (Meth)acrylats;
c) von 35 bis 45 Gewichtsprozent eines Polythiols;
d) 0 bis 10 Gewichtsprozent Dicyandiamid;
e) 0,1 bis 2 Prozent Radikalphotoinitiator;
f) 0,5 bis 1 Gewichtsprozent 2-Alkylimidazol; und
g) 0 bis 5 Prozent Phenolharz.

2. Eine härtbare Zusammensetzung nach Anspruch 1, wobei die härtbare Zusammensetzung weniger als ein Gewichtsprozent Phenolharz enthält.

3. Eine härtbare Zusammensetzung nach Anspruch 1 oder 2, wobei die härtbare Zusammensetzung weniger als ein Gewichtsprozent gelöstes thermoplastisches Polymer enthält.

4. Eine härtbare Zusammensetzung nach einem der Ansprüche 1 bis 3, wobei das Bindemittel weniger als ein Gewichtsprozent Dicyandiamid enthält.

5. Ein beschichteter Schleifgegenstand, der einen Träger und eine an dem Träger befestigte Schleifschicht umfasst, wobei die Schleifschicht eine Grundschicht, die auf mindestens einem Abschnitt einer Hauptoberfläche des Trägers angeordnet ist, teilweise in die Grundschicht eingebettete Schleifteilchen und eine Deckschicht, die mindestens einen Abschnitt der Grundschicht und der Schleifteilchen überdeckt, umfasst, und wobei die Grundschicht ein Reaktionsprodukt von Komponenten umfasst, die, bezogen auf das Gesamtgewicht der Komponenten a) bis g), umfassen:
a) von 45 bis 55 Gewichtsprozent Epoxidharz, herstellbar durch Umsetzung von Epichlorhydrin mit mindestens einem von Bisphenol A oder Bisphenol F;
b) von 6 bis 12 Gewichtsprozent eines mindestens trifunktionellen (Meth)acrylats;
c) von 35 bis 45 Gewichtsprozent eines Polythiols;
d) 0 bis 10 Gewichtsprozent Dicyandiamid;
e) 0,1 bis 2 Prozent Radikalphotoinitiator;
f) 0,5 bis 1 Gewichtsprozent 2-Alkylimidazol; und
g) 0 bis 5 Prozent Phenolharz.

6. Ein beschichteter Schleifgegenstand nach Anspruch 5, wobei die Grundschicht weniger als ein Gewichtsprozent Phenolharz enthält.

7. Ein beschichteter Schleifgegenstand nach Anspruch 5 oder 6, wobei die Grundschicht weniger als ein Gewichtsprozent gelöstes thermoplastisches Polymer enthält.

8. Ein beschichteter Schleifgegenstand nach einem der Ansprüche 5 bis 7, wobei die Grundschicht weniger als einGewichtsprozent Dicyandiamid enthält.

9. Ein beschichteter Schleifgegenstand nach einem der Ansprüche 5 bis 8, wobei der Träger mindestens eines von Gewebe, Polymerfolie, Papier, Netz, vulkanisierter Faser, Folie oder Schaum umfasst und ein Flächengewicht in einem Bereich von 40 bis 1200 Gramm pro Quadratmeter aufweist.

10. Ein beschichteter Schleifgegenstand nach einem der Ansprüche 5 bis 9, ferner umfassend eine auf mindestens einem Abschnitt der Deckschicht angeordnete Zusatzdeckschicht.

11. Ein Verfahren zum Abschleifen eines Werkstücks, umfassend:
Bereitstellen eines beschichteten Schleifgegenstands nach einem der Ansprüche 5 bis 10;
Reibkontaktieren mindestens eines Abschnitts der Schleifschicht mit mindestens einem Abschnitt einer Oberfläche des Werkstücks; und
Bewegen von mindestens einem von dem beschichteten Schleifgegenstand oder dem Werkstück relativ zueinander, um mindestens einen Abschnitt der Oberfläche abzuschleifen.

12. Ein Verfahren zum Herstellen eines beschichteten Schleifgegenstands, umfassend:
Bereitstellen eines Trägers, der erste und zweite gegenüberliegende Hauptoberflächen aufweist;
Aufbringen eines härtbaren Grundschichtvorläufers auf mindestens einen Abschnitt der ersten Hauptoberfläche, wobei der härtbare Grundschichtvorläufer, bezogen auf das Gesamtgewicht der Komponenten a) bis g), umfasst:
a) von 45 bis 55 Gewichtsprozent Epoxidharz, herstellbar durch Umsetzung von Epichlorhydrin mit mindestens einem von Bisphenol A oder Bisphenol F;
b) von 6 bis 12 Gewichtsprozent eines mindestens trifunktionellen (Meth)acrylats;
c) von 35 bis 45 Gewichtsprozent eines Polythiols;
d) 0 bis 10 Gewichtsprozent Dicyandiamid;
e) 0,1 bis 2 Prozent Radikalphotoinitiator;
f) 0,5 bis 1 Gewichtsprozent 2-Alkylimidazol; und
g) 0 bis 5 Prozent Phenolharz; und
Aussetzen des härtbaren Grundschichtvorläufers einer aktinischen Strahlung, die ausreicht, um einen teilweise gehärteten Grundschichtvorläufer bereitzustellen;
Einbetten von Schleifteilchen in den teilweise gehärteten Grundschichtvorläufer;
Aushärten des teilweise ausgehärteten Grundschichtvorläufers;
Aufbringen eines Deckschichtvorläufers über mindestens einen Abschnitt der Grundschicht und der Schleifteilchen; und
mindestens teilweises Aushärten des Deckschichtvorläufers.

13. Ein Verfahren nach Anspruch 12, wobei das Bindemittel weniger als ein Gewichtsprozent Phenolharz enthält.

14. Ein Verfahren nach Anspruch 12 oder 13, wobei das Bindemittel weniger als ein Gewichtsprozent gelöstes thermoplastisches Polymer enthält.

15. Ein Verfahren nach einem der Ansprüche 12 bis 14, wobei das Bindemittel weniger als ein Gewichtsprozent Dicyandiamid enthält.

## Revendications

1. Composition durcissable comprenant, en fonction du poids total des composants a) jusqu'à g) :
a) de 45 à 55 pour cent en poids de résine époxy pouvant être préparée par réaction d'épichlorhydrine avec au moins l'un parmi le bisphénol A ou le bisphénol F ;
b) de 6 à 12 pour cent en poids d'un au moins trifonctionnel (méth)acrylate ;
c) de 35 à 45 pour cent en poids d'un polythiol ;
d) de 0 à 10 pour cent en poids de dicyandiamide ;
e) de 0,1 à 2 pour cent de photo-initiateur radicalaire ;
f) de 0,5 à 1 pour cent en poids de 2-alkylimidazole ; et
g) de 0 à 5 pour cent de résine phénolique.

2. Composition durcissable selon la revendication 1, dans laquelle la composition durcissable contient moins d'un pour cent en poids de résine phénolique.

3. Composition durcissable selon la revendication 1 ou 2, dans laquelle la composition durcissable contient moins d'un pour cent en poids de polymère thermoplastique dissous.

4. Composition durcissable selon l'une quelconque des revendications 1 à 3, dans laquelle le liant contient moins d'un pour cent en poids de dicyandiamide.

5. Article abrasif revêtu comprenant un support et une couche abrasive fixant le support, dans lequel la couche abrasive comprend une couche de fabrication disposée sur au moins une partie d'une surface principale du support, des particules abrasives partiellement noyées dans la couche de fabrication, et une couche d'encollage recouvrant au moins une partie de la couche de fabrication et des particules abrasives, et dans lequel la couche de fabrication comprend un produit de réaction de composants comprenant, sur la base du poids total des composants a) à g) :
a) de 45 à 55 pour cent en poids de résine époxy pouvant être préparée par réaction d'épichlorhydrine avec au moins l'un parmi le bisphénol A ou le bisphénol F ;
b) de 6 à 12 pour cent en poids d'un au moins trifonctionnel (méth)acrylate ;
c) de 35 à 45 pour cent en poids d'un polythiol ;
d) de 0 à 10 pour cent en poids de dicyandiamide ;
e) de 0,1 à 2 pour cent de photo-initiateur radicalaire ;
f) de 0,5 à 1 pour cent en poids de 2-alkylimidazole ; et
g) de 0 à 5 pour cent de résine phénolique.

6. Article abrasif revêtu selon la revendication 5, dans lequel la couche de fabrication contient moins d'un pour cent en poids de résine phénolique.

7. Article abrasif revêtu selon la revendication 5 ou 6, dans lequel la couche de fabrication contient moins d'un pour cent en poids de polymère thermoplastique dissous.

8. Article abrasif revêtu selon l'une quelconque des revendications 5 à 7, dans lequel la couche de fabrication contient moins d'un pour cent en poids de dicyandiamide.

9. Article abrasif revêtu selon l'une quelconque des revendications 5 à 8, dans lequel le support comprend au moins l'un parmi un tissu, un film polymère, un papier, un treillis, une fibre vulcanisée, une feuille ou une mousse et a un poids de base dans une plage allant de 40 à 1200 grammes par mètre carré.

10. Article abrasif revêtu selon l'une quelconque des revendications 5 à 9, comprenant en outre une couche de surencollage disposée sur au moins une partie de la couche d'encollage.

11. Procédé d'abrasion d'une pièce à usiner, comprenant :
la fourniture d'un article abrasif revêtu selon l'une quelconque des revendications 5 à 10 ;
la mise en contact par frottement au moins une partie de la couche abrasive avec au moins une partie d'une surface d'une pièce à usiner ; et
le déplacement d'au moins l'un de l'article abrasif revêtu ou la pièce à usiner par rapport à l'autre pour abraser au moins une partie de la surface.

12. Procédé de fabrication d'un article abrasif revêtu, comprenant :
la fourniture d'un support ayant des première et seconde surfaces principales opposées ;
la disposition d'un précurseur de couche de fabrication durcissable sur au moins une partie de la première surface principale, dans lequel le précurseur de couche de fabrication durcissable comprend, sur la base du poids total des composants a) à g) :
a) de 45 à 55 pour cent en poids de résine époxy pouvant être préparée par réaction d'épichlorhydrine avec au moins l'un parmi le bisphénol A ou le bisphénol F ;
b) de 6 à 12 pour cent en poids d'un au moins trifonctionnel (méth)acrylate ;
c) de 35 à 45 pour cent en poids d'un polythiol ;
d) de 0 à 10 pour cent en poids de dicyandiamide ;
e) de 0,1 à 2 pour cent de photo-initiateur radicalaire ;
f) de 0,5 à 1 pour cent en poids de 2-alkylimidazole ; et
g) de 0 à 5 pour cent de résine phénolique ; et
l'exposition du précurseur de couche de fabrication durcissable à un rayonnement actinique suffisant pour fournir un précurseur de couche de fabrication partiellement durci ;
l'incorporation de particules abrasives dans le précurseur de couche de fabrication partiellement durci ;
le durcissement du précurseur de couche de fabrication partiellement durci ;
le dépôt d'un précurseur de couche d'encollage sur l'au moins une partie de la couche de préparation et des particules abrasives ; et
le durcissement au moins partiel du précurseur de couche d'encollage.

13. Procédé selon la revendication 12, dans lequel le liant contient moins d'un pour cent en poids de résine phénolique.

14. Procédé selon la revendication 12 ou 13, dans lequel le liant contient moins d'un pour cent en poids de polymère thermoplastique dissous.

15. Procédé selon l'une quelconque des revendications 12 à 14, dans lequel le liant contient moins d'un pour cent en poids de dicyandiamide.
